# FASCICULE DE BREVET EUROPEEN

(11) **EP 3 574 980 B1**
(45) Date de publication et mention de la délivrance du brevet: **23.12.2020**
(21) Numéro de dépôt: 19176703.7
(22) Date de dépôt: 27.05.2019
(51) Int. Cl.: B01D 53/85, A01G 27/00, E01C 1/00, E04H 1/12, A01G 9/033, B01D 46/30, F24F 11/00, F24F 3/16

(54) **BÂTIMENT DÉPOLLUANT**
SCHADSTOFFBESEITIGENDES BAUWERK
AIR CLEANING STRUCTURE

(30) Priorité: 01.06.2018 FR 1854779
(43) Date de publication de la demande: 04.12.2019
(73) Titulaire: JCDecaux SA, 92200 Neuilly-Sur-Seine (FR)
(72) Inventeur: FLOUME, Timmy, 93170 Bagnolet (FR)
(74) Mandataire: Plasseraud IP

(56) Documents cités:
- WO-A1-00/36342
- FR-A1- 2 837 723
- JP-A- H0 727 367
- US-A- 4 961 763
- US-A- 5 180 552
- US-A1- 2012 090 232

## Description

### DOMAINE TECHNIQUE

La présente description concerne les bâtiments dépolluants.

Plus particulièrement, la présente description concerne un bâtiment dépolluant incluant une couverture et une structure porteuse supportant la couverture et délimitant sous la couverture un espace libre ayant une hauteur d'au moins 2 m, la couverture comprenant :
- une couche filtrante végétale perméable à l'eau et à l'air,
- une paroi supérieure qui est perméable à l'eau et à l'air et qui supporte la couche filtrante,
- une paroi inférieure qui est disposée sous la paroi supérieure et qui est imperméable à l'eau, la paroi inférieure délimitant avec la paroi supérieure un plenum,
- au moins un dispositif de ventilation forcée adapté pour aspirer de l'air dans le plenum au travers de la couche filtrante et de la paroi supérieure et pour refouler l'air dans ledit espace libre.

### ARRIERE-PLAN TECHNOLOGIQUE

WO0036342 A1divulgue un abri pour voyageurs de transport en commun, filtrant l'air pollué.

Le document WO2010/128252 décrit un exemple de toiture dépolluante, qui présente notamment l'inconvénient de comporter un dispositif de ventilation relativement complexe pour aspirer de l'air au-travers de la couche filtrante.

### OBJETS ET RESUME

La présente description a notamment pour but de pallier cet inconvénient.

A cet effet, dans un bâtiment du type susmentionné, le dispositif de ventilation forcée comporte :
- une cheminée étanche à l'eau qui s'étend dans le plenum entre une extrémité inférieure raccordée de façon étanche à la paroi inférieure et une extrémité supérieure débouchant dans le plenum, l'extrémité inférieure de la cheminée communiquant avec l'atmosphère sous la paroi inférieure,
- et un ventilateur disposé dans ladite cheminée, un chapeau étant disposé au-dessus de la cheminée, ledit chapeau étant imperméable et conformé pour éviter que de l'eau traversant la couche filtrante et la paroi supérieure ne tombe dans la cheminée.

De cette façon, on simplifie la structure du dispositif d'aspiration tout en assurant que la présence d'eau ne perturbe pas le fonctionnement du dispositif de ventilation forcée.

La présente invention est un dispositif selon la revendication 1 et l'utilisation du dispositif selon la revendication 14.

Dans divers modes de réalisation du bâtiment dépolluant, on peut éventuellement avoir recours en outre à l'une et/ou à l'autre des dispositions suivantes :
- la couverture est sensiblement horizontale (par exemple, horizontale ou inclinée de moins de 10 degrés par rapport à un plan horizontal) ;
- le chapeau comporte un dessus recouvrant la cheminée et un rebord périphérique s'étendant vers le bas à partir d'une périphérie du dessus du chapeau, éventuellement jusqu'à un bord inférieur situé sous le niveau du bord supérieur de la cheminée ;
- le dessus du chapeau appartient à la paroi supérieure ;
- la couverture comporte un rebord arrière délimitant le plenum et au voisinage duquel est disposée la cheminée, et le chapeau comporte un dessus recouvrant la cheminée, le dessus s'étendant depuis le rebord en passant au-dessus de la cheminée jusqu'à un bord avant situé au-delà de la chemine, ledit bord avant étant prolongé vers le bas par un rabat ;
- la construction dépolluante comporte en outre un conduit d'évacuation d'eau débouchant dans le plénum ;
- la construction dépolluante comporte en outre une unité centrale électronique qui est reliée au ventilateur et qui est adaptée pour commander ledit ventilateur ;
- la construction dépolluante comporte en outre au moins un capteur d'humidité adapté pour mesurer une humidité dans la couche filtrante, et l'unité centrale électronique est adaptée pour commander le ventilateur de façon que le ventilateur ne fonctionne pas lorsque l'humidité mesurée dépasse un premier seuil prédéterminé ;
- le ventilateur est adapté pour mesurer et communiquer à l'unité centrale électronique au-moins un paramètre de fonctionnement dudit ventilateur et l'unité centrale électronique est adaptée pour arrêter le ventilateur lorsque ledit paramètre de fonctionnement correspond un fonctionnement anormal du ventilateur ;
- le plenum est adapté pour retenir de l'eau et la couverture inclut en outre un dispositif d'arrosage comportant une pompe adaptée pour pomper de l'eau dans le plenum et au moins un conduit raccordé à la pompe et disposé pour arroser la couche filtrante lorsque la pompe fonctionne ;
- la construction comporte en outre au moins un capteur d'humidité adapté pour mesurer une humidité dans la couche filtrante, et une unité centrale électronique qui est reliée au capteur d'humidité et au ventilateur et qui est programmée pour commander le ventilateur de façon que le ventilateur ne fonctionne pas lorsque l'humidité mesurée dépasse un premier seuil prédéterminé ;
- l'unité centrale électronique est reliée à la pompe et est programmée pour commander la pompe afin d'arroser la couche filtrante lorsque l'humidité mesurée est au-dessous d'un deuxième seuil prédéterminé ;
- l'unité centrale électronique communique avec un dispositif externe adapté pour donner à ladite unité centrale électronique des informations relatives à un niveau de pollution d'air, et ladite unité centrale électronique est adaptée pour faire fonctionner le ventilateur uniquement lorsque le niveau de pollution d'air est supérieur à un seuil prédéterminé.

La présente description a également pour objet une utilisation d'un bâtiment dépolluant tel que défini ci-dessus, comme abri pour voyageurs de transport en commun.

### BREVE DESCRIPTION DES DESSINS

D'autres caractéristiques et avantages apparaîtront au cours de la description suivante de deux formes de réalisation, données à titre d'exemple non limitatif, en regard des dessins joints.

Sur les dessins :
- la figure 1 est une vue schématique en perspective d'un bâtiment dépolluant selon une première forme de réalisation,
- la figure 2 est une vue en coupe verticale du bâtiment construction de la figure 1,
- la figure 2A est une vue du détail A de la figure 2,
- la figure 3 est un schéma bloc des dispositifs électriques du bâtiment des figures 1 à 2A,
- et la figure 4 est une vue en coupe d'un bâtiment dépolluant selon une deuxième forme de réalisation.

### DESCRIPTION PLUS DETAILLEE

Sur les différentes figures, les mêmes références désignent des éléments identiques ou similaires.

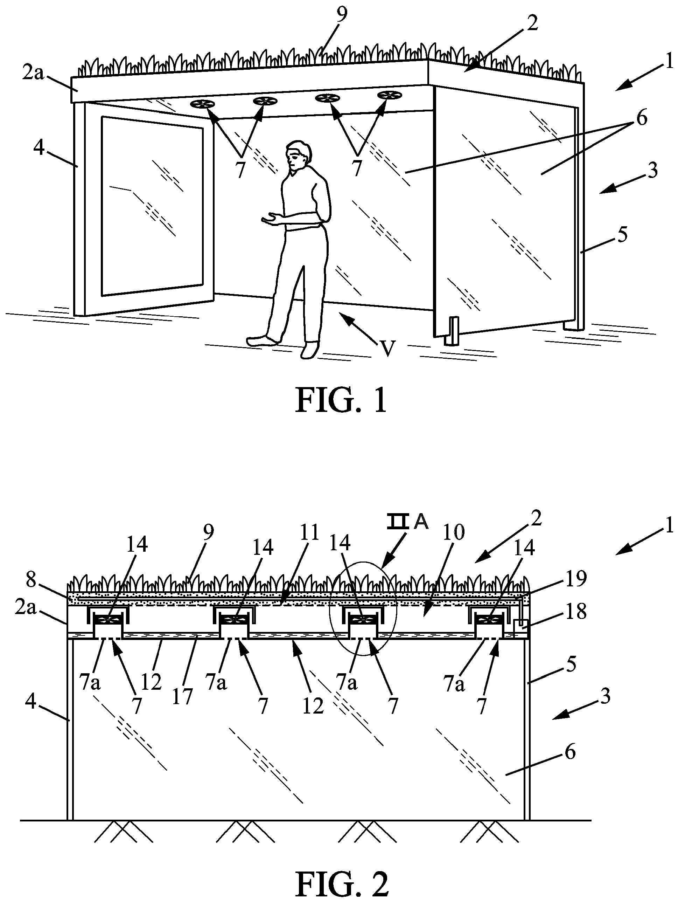

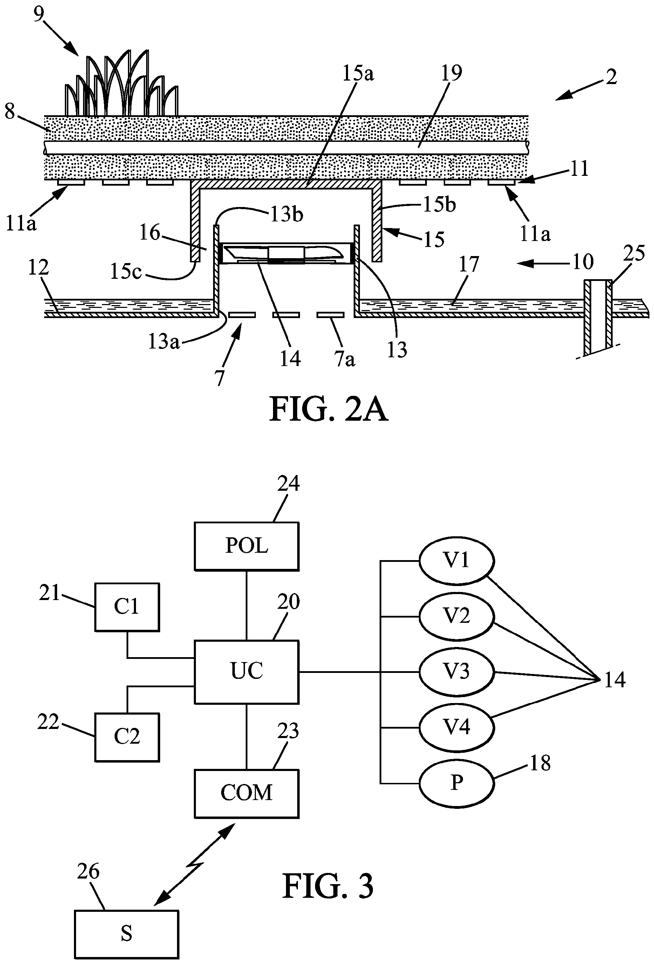

Les figures 1 et 2 montrent un bâtiment dépolluant 1, qui dépollue l'air ambiant par aspiration au travers d'une couche filtrante comme il sera décrit plus loin.

Le bâtiment dépolluant 1 peut être notamment un abri pour voyageurs V de transport en commun.

Le bâtiment dépolluant 1 comporte une couverture 2 qui comprend la couche filtrante susmentionnée. La couverture peut être sensiblement horizontale (par exemple, horizontale ou inclinée de moins de 10 degrés par rapport à un plan horizontal).

Le bâtiment dépolluant 1 comporte une structure porteuse 3 supportant la couverture 2 et délimitant sous la couverture un espace libre ayant une hauteur d'au moins 2 m.

Dans l'exemple représenté, la structure porteuse 3 peut comporter diverses parties telles qu'un ou des panneaux d'affichage 4 et / ou un ou des poteaux 5, et des parois verticales 6 telles que des parois de verre ou autres peuvent également être supportées par la structure porteuse 3.

Comme représenté plus en détail sur les figures 2 et 2A, la couverture 2 comporte un ou des dispositifs de ventilation forcée 7, qui permettent d'aspirer de l'air ambiant à travers la couche filtrante susmentionnée, qui est perméable à l'eau et à l'air. Cette couche filtrante est une couche végétale. La couche filtrante peut comprendre notamment un substrat 8 sur lequel pousse de la végétation 9.

Le substrat 8 peut être un géotextile ou tout autre substrat sur lequel peut pousser la végétation 9. La végétation 9 peut être une végétation possédant des propriétés particulières de dépollution.

La végétation 9 peut par exemple comprendre des bryophytes ou être constituée entièrement ou quasi-entièrement de bryophytes.

Sous la couche filtrante 8-9, la couverture 2 comprend un plénum 10 qui est délimité entre :
- une paroi supérieure 11 rigide qui est perméable à l'eau et à l'air et qui supporte la couche filtrante 8-9,
- une paroi inférieure 12 rigide qui est disposée sous la paroi supérieure 11 et qui est imperméable à l'eau.

La paroi supérieure 11 et la paroi inférieure 12 peuvent être maintenues écartées l'une de l'autre par une paroi latérale périphérique 2a de la couverture 2, avec laquelle elles peuvent former un caisson fermé. Des entretoises peuvent en outre être prévues entre la paroi supérieure 11 et la paroi inférieure 12.

La paroi supérieure 11 peut comporter des portions ajourées 11a, pour laisser passer l'air et l'eau.

Le ou les dispositifs de ventilation forcée 7 sont adaptés pour aspirer de l'air dans le plenum 10 au travers de la couche filtrante 8-9 et de la paroi supérieure 11, pour le refouler dans l'espace d'attente pour les voyageurs V, sous la couverture 2. L'air ainsi aspiré est dépollué en traversant la couche filtrante 8-9.

Au moins un dispositif de ventilation forcée 7 comporte :
- une cheminée 13 étanche à l'eau qui s'étend dans le plenum 10 entre une extrémité inférieure 13a raccordée de façon étanche à la paroi inférieure 12 et une extrémité supérieure 13b débouchant dans le plenum 10, l'extrémité inférieure 13a de la cheminée 13 communiquant avec l'atmosphère sous la paroi inférieure 12, par exemple au travers d'une grille 7a ou similaire ;
- et un ventilateur 14 disposé dans ladite cheminée.

Chaque cheminée 13 est en outre dotée d'un chapeau 15 disposé au-dessus de ladite cheminée 13, ledit chapeau 15 étant imperméable et conformé pour éviter que de l'eau traversant la couche filtrante 8-9 et la paroi supérieure 11 ne tombe dans la cheminée 13.

Le chapeau 15 peut par exemple comporter un dessus 15a recouvrant la cheminée 13 et un rebord périphérique 15b s'étendant vers le bas jusqu'à un bord inférieur 15c à partir d'une périphérie du dessus 15a du chapeau, en laissant un espace annulaire libre 16 entre le rebord périphérique 15b et la cheminée 13. L'air aspiré par le ventilateur 14 dans le plenum 10 passe donc dans cet espace annulaire libre 16.

Le dessus 15a de chaque chapeau 15 peut appartenir à la paroi supérieure 11, cette paroi supérieure 11 étant alors ajourée en dehors des zones formant les dessus 15a de chapeaux.

Lorsqu'il pleut ou lorsque la végétation 9 est arrosée, l'eau qui n'est pas absorbée par la végétation 9 traverse la paroi supérieure 11 et tombe dans le plénum 10. Au-dessus de la paroi inférieure 12 se forme donc une couche d'eau 17.

Cette eau 17 peut être réutilisée pour arroser la végétation 9, grâce à un dispositif d'arrosage comprenant :
- une pompe électrique 18 disposée dans le fond du plenum 10,
- et au moins un conduit 19 raccordé à la pompe 18 et disposé pour arroser la couche filtrante 8-9 lorsque la pompe 18 fonctionne (il peut par exemple d'un ou plusieurs tuyaux poreux disposés dans le substrat 8, de façon connue en soi).

On notera que le plenum 10 peut comporter un conduit d'évacuation d'eau 25 débouchant dans le plenum 10 et formant un trop plein permettant d'évacuer de l'eau 17 en excès, au-delà d'un certain niveau de la couche d'eau 17.

La pompe 18 peut être commandée par une unité centrale électronique 20 (UC) telle qu'un contrôleur ou similaire (voir figure 3).

L'unité centrale électronique 20 peut être également reliée à un capteur d'humidité 21 (C1) disposé dans le substrat 8 pour mesurer une humidité dans la couche filtrante. L'unité centrale électronique 20 peut être également reliée à un capteur de niveau d'eau 22 (C2) adapté pour mesurer le niveau d'eau 17 dans le plenum 10.

L'unité centrale électronique 20 peut être également reliée aux ventilateurs 14 pour les commander.

L'unité centrale électronique 20 peut être adaptée (programmée) pour commander les ventilateurs 14 de façon que les ventilateurs 14 ne fonctionnent pas lorsque l'humidité mesurée par le capteur d'humidité 21 dépasse un premier seuil prédéterminé (correspondant à une quantité d'eau dans la couche filtrante 8-9 qui en pratique interdit d'aspirer de l'air au-travers de cette couche filtrante). On allonge ainsi la durée de vie des ventilateurs 14.

En variante ou en complément, les ventilateurs 14 peuvent en outre être adaptés pour mesurer et communiquer à l'unité centrale électronique 20 au-moins un paramètre de fonctionnement dudit ventilateur 14, par exemple la vitesse de rotation de chaque ventilateur 14 ou encore la puissance électrique consommée. Dans ce cas l'unité centrale électronique 20 peut être adaptée pour arrêter les ventilateurs 14 lorsque ledit paramètre de fonctionnement correspond un fonctionnement anormal des ventilateurs 14, ce qui peut correspondre à un excès d'eau dans la couche filtrante 8-9. On allonge ainsi également la durée de vie des ventilateurs 14.

L'unité centrale électronique 20 peut également être programmée pour commander la pompe 18 afin d'arroser la couche filtrante 8-9 lorsque l'humidité mesurée est au-dessous d'un deuxième seuil prédéterminé (inférieur au premier seuil) et lorsque le niveau d'eau 17 est suffisant pour permettre un fonctionnement de la pompe 18.

On notera que l'unité centrale électronique 20 pourrait également commander une vanne à trois voies ou similaire, permettant de faire fonctionner la pompe 18 non pour arroser la végétation, mais pour évacuer de l'eau 17.

L'unité centrale électronique 20 peut en outre éventuellement communiquer avec l'extérieur, notamment avec un serveur 26 (S) par une interface de communication 23 (COM), notamment radio ou filaire. Le serveur 26 peut notamment donner à ladite unité centrale électronique 20 des informations quantitatives et / ou qualitatives relatives à un niveau de pollution d'air.

En variante ou en complément, l'unité centrale électronique 20 peut être reliée à un capteur externe de pollution d'air 24 (POL), connu en soi, adapté pour mesurer un ou plusieurs paramètres de pollution d'air.

En fonction des informations données par le serveur 24 et / ou le capteur de pollution d'air 26, l'unité centrale électronique peut ainsi commander les ventilateurs 14 en fonction des informations de pollution d'air dont elle dispose, par exemple de façon à les faire fonctionner uniquement en cas de pic de pollution afin de diminuer leur consommation électrique et d'allonger leur durée de vie.

On notera enfin que la couverture 2 pourrait également comporter une grille supérieure ou similaire (non représentée), recouvrant la végétation 9 et permettant à des personnes de marcher au-dessus de la végétation 9 sans l'abîmer.

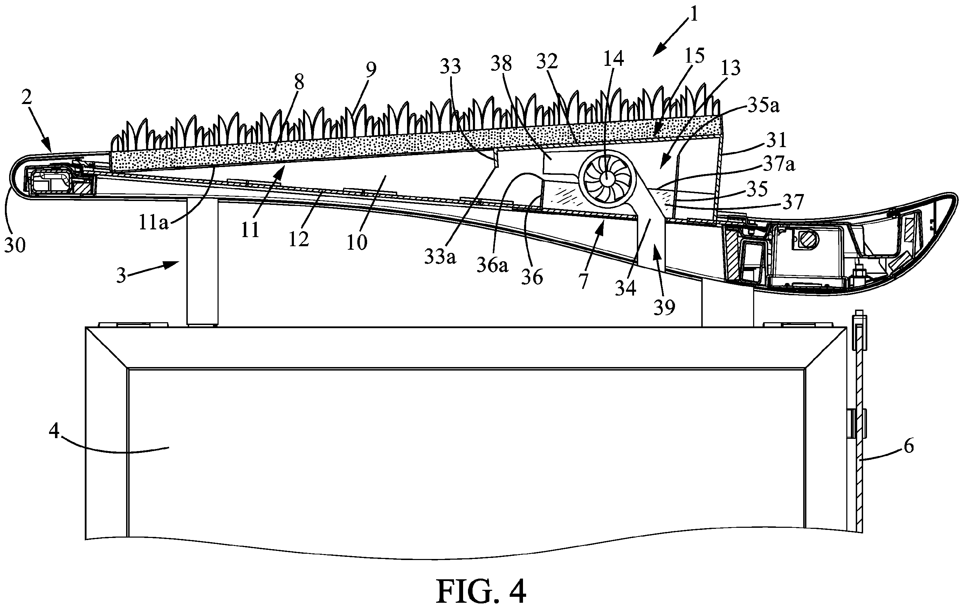

La deuxième forme de réalisation, représentée sur la figure 4, est similaire à la première forme de réalisation. Tout ce qui a été décrit ci-dessus relativement à la première forme de réalisation est applicable à la deuxième forme de réalisation, sauf pour ce qui concerne les différences décrites ci-dessous.

Dans cette deuxième forme de réalisation, la couverture 2 présente un bord avant 30 et une paroi arrière formant un rebord 31 délimitant le plenum 10 vers l'arrière. Dans l'exemple représenté, l'épaisseur de la couverture 2 croît du bord avant vers le bord arrière.

Le ou les dispositif(s) de ventilation forcée 7 comprend / comprennent chacun un ventilateur 14, par exemple de type tangentiel.

Le ou chaque ventilateur 14 est disposé dans une cheminée 13 étanche à l'eau, dont l'extrémité inférieure est raccordée da façon étanche à la paroi inférieur 12 qui délimite le plenum 10 et dont l'extrémité supérieure est ouverte vers le plénum. La cheminée 13 peut être située au voisinage du rebord 31, à l'intérieur du plenum 10.

La cheminée 13 peut être délimitée par exemple par une paroi arrière 35 sensiblement verticale et sensiblement parallèle au bord arrière 31 de la toiture, une paroi avant 36 parallèle à la paroi arrière 35 et deux parois latérales 37. La paroi arrière 35 présente un bord supérieur 35a, la paroi avant 36 présente un bord supérieur 36a et les parois latérales 37 présentent des bords supérieurs respectifs 37a. Dans l'exemple représenté, le bord supérieur 35a est plus haut que les bords supérieurs 36a, 37a.

La cheminée 13 est recouverte par un chapeau 15 qui comporte ici un dessus étanche 32 prolongeant vers l'avant le rebord arrière 31 de la couverture 2.

Le dessus 32 s'étend vers l'avant au-delà du bord avant 36 de la cheminée, jusqu'à un rabat 33 s'étendant vers le bas jusqu'à un bord inférieur 33a. Dans l'exemple représenté, le bord inférieur 33a est situé à un niveau supérieur aux bords supérieurs 36a, 37a mais inférieur au bord supérieur 35a.

Le ou chaque ventilateur 14 comporte une entrée d'air 38 aspirant l'air propre dans le plenum 10 et une sortie d'air 39 refoulant l'air propre vers les voyageurs dans l'espace libre situé sous la couverture 2.

## Revendications

1. Bâtiment dépolluant (1) incluant une couverture (2) et une structure porteuse (3) supportant la couverture (2) et délimitant sous la couverture (2) un espace libre ayant une hauteur d'au moins 2 m, la couverture comprenant :
- une couche filtrante (8-9) végétale,
- une paroi supérieure (11) qui est perméable à l'eau et à l'air et qui supporte la couche filtrante (8-9),
- une paroi inférieure (12) qui est disposée sous la paroi supérieure (11) et qui est imperméable à l'eau, la paroi inférieure (12) délimitant avec la paroi supérieure (11) un plenum (10),
- au moins un dispositif de ventilation forcée (7) adapté pour aspirer de l'air dans le plenum (10) au travers de la couche filtrante (8-9) et de la paroi supérieure (11) et pour refouler l'air dans ledit espace libre,
dans laquelle le dispositif de ventilation forcée (7) comporte :
- une cheminée (13) étanche à l'eau qui s'étend dans le plenum (10) entre une extrémité inférieure (13a) raccordée de façon étanche à la paroi inférieure (12) et une extrémité supérieure (13b) débouchant dans le plenum (10), l'extrémité inférieure (13a) de la cheminée communiquant avec l'atmosphère sous la paroi inférieure (12),
- et un ventilateur (14) disposé dans ladite cheminée (13),
un chapeau (15) étant disposé au-dessus de la cheminée (13), ledit chapeau (15) étant imperméable et conformé pour éviter que de l'eau traversant la couche filtrante (8-9) et la paroi supérieure (11) ne tombe dans la cheminée (13).

2. Bâtiment dépolluant (1) selon la revendication 1, dans lequel la couverture (2) est sensiblement horizontale.

3. Bâtiment dépolluant (1) selon l'une quelconque des revendications précédentes, dans lequel le chapeau (15) comporte un dessus (15a) recouvrant la cheminée (13) et un rebord périphérique (15b) s'étendant vers le bas à partir d'une périphérie du dessus (15a) du chapeau, jusqu'à un bord inférieur (15c) situé sous le niveau du bord supérieur de la cheminée.

4. Bâtiment dépolluant (1) selon la revendication 3, dans lequel le rebord périphérique (15b) s'étendant vers le bas jusqu'à un bord inférieur (15c) situé sous le niveau du bord supérieur de la cheminée (13).

5. Bâtiment dépolluant (1) selon la revendication 3 ou la revendication 4, dans lequel le dessus (15a) du chapeau appartient à la paroi supérieure (11).

6. Bâtiment dépolluant (1) selon l'une quelconque des revendications 1 et 2, dans lequel la couverture (2) comporte un rebord arrière (31) délimitant le plenum (10) et au voisinage duquel est disposée la cheminée (13),
et dans lequel le chapeau (15) comporte un dessus (32) recouvrant la cheminée (13), le dessus (32) s'étendant depuis le rebord (31) en passant au-dessus de la cheminée (15) jusqu'à un bord avant situé au-delà de la chemine, ledit bord avant étant prolongé vers le bas par un rabat (33) .

7. Bâtiment dépolluant (1) selon l'une quelconque des revendications précédentes, comportant en outre un conduit d'évacuation d'eau (25) débouchant dans le plenum (10) .

8. Bâtiment dépolluant (1) selon l'une quelconque des revendications précédentes, comportant en outre une unité centrale électronique (20) qui est reliée au ventilateur (14) et qui est adaptée pour commander ledit ventilateur (14).

9. Bâtiment dépolluant (1) selon la revendication 8, comportant en outre au moins un capteur d'humidité (21) adapté pour mesurer une humidité dans la couche filtrante (8-9), et dans lequel l'unité centrale électronique (20) est adaptée pour commander le ventilateur (14) de façon que le ventilateur (14) ne fonctionne pas lorsque l'humidité mesurée dépasse un premier seuil prédéterminé.

10. Bâtiment dépolluant (1) selon la revendication 8 ou la revendication 9, dans lequel le ventilateur (14) est adapté pour mesurer et communiquer à l'unité centrale électronique (20) au-moins un paramètre de fonctionnement dudit ventilateur (14) et l'unité centrale électronique (20) est adaptée pour arrêter le ventilateur (14) lorsque ledit paramètre de fonctionnement correspond un fonctionnement anormal du ventilateur (14).

11. Bâtiment dépolluant (1) selon l'une quelconque des revendications précédentes, dans lequel le plenum (10) est adapté pour retenir de l'eau (17) et la couverture (2) inclut en outre un dispositif d'arrosage (18-19) comportant une pompe (18) adaptée pour pomper de l'eau (17) dans le plenum (10) et au moins un conduit (19) raccordé à la pompe (18) et disposé pour arroser la couche filtrante (8-9) lorsque la pompe (18) fonctionne.

12. Bâtiment dépolluant (1) selon l'une des revendications 8 à 10 en combinaison avec la revendication 11, dans lequel l'unité centrale électronique (20) est reliée à la pompe (18) et est programmée pour commander la pompe (18) afin d'arroser la couche filtrante (18-19) lorsque l'humidité mesurée est au-dessous d'un deuxième seuil prédéterminé.

13. Bâtiment dépolluant (1) selon l'une quelconque des revendications 8 à 12, dans lequel l'unité centrale électronique (20) communique avec un dispositif externe (24, 26) adapté pour donner à ladite unité centrale électronique (20) des informations relatives à un niveau de pollution d'air, et ladite unité centrale électronique (20) est adaptée pour faire fonctionner le ventilateur (14) uniquement lorsque le niveau de pollution d'air est supérieur à un seuil prédéterminé.

14. Utilisation d'un bâtiment dépolluant (1) selon l'une quelconque des revendications précédentes, comme un abri pour voyageurs (V) de transport en commun.

## Patentansprüche

1. Schadstoffbeseitigendes Bauwerk (1), das eine Bedachung (2) und eine tragende Struktur (3) aufweist, die die Bedachung (2) trägt und unterhalb der Bedachung (2) einen freien Raum begrenzt, der eine Höhe von mindestens 2m hat, wobei die Bedachung aufweist:
- eine pflanzliche Filtrierschicht (8-9),
- eine obere Wand (11), die für Wasser und Luft durchlässig ist und die die Filtrierschicht (8-9) trägt,
- eine untere Wand (12), die unterhalb der oberen Wand (11) angeordnet ist und die für Wasser undurchlässig ist, wobei die untere Wand (12) gemeinsam mit der oberen Wand (11) eine Sammelkammer (10) begrenzt,
- mindestens eine Zwangsbelüftungsvorrichtung (7), die eingerichtet ist, Luft über die Filtrierschicht (8-9) und die obere Schicht (11) in die Sammelkammer (10) zu saugen und die Luft in den freien Raum zu fördern,
wobei die Zwangsbelüftungsvorrichtung (7) aufweist:
- einen wasserdichten Schacht (13), der sich in der Sammelkammer (10) zwischen einem auf dichte Weise mit der unteren Wand (12) verbundenen unteren Ende (13a) und einem zur Sammelkammer (10) hin offenen oberen Ende (13b) erstreckt, wobei das untere Ende (13a) des Schachts mit der Atmosphäre unterhalb der unteren Wand (12) in Verbindung steht,
- und ein in dem Schacht (13) angeordnetes Gebläse (14),
wobei eine Kappe (15) oberhalb des Schachts (13) angeordnet ist, wobei die Kappe (15) undurchlässig ist und gestaltet ist, um zu vermeiden, dass Wasser, das durch die Filtrierschicht (8-9) und die obere Wand (11) hindurchgegangen ist, in den Schacht (13) fällt.

2. Schadstoffbeseitigendes Bauwerk (1) nach Anspruch 1, wobei die Bedachung (2) im Wesentlichen horizontal ist.

3. Schadstoffbeseitigendes Bauwerk (1) nach einem der vorstehenden Ansprüche, wobei die Kappe (15) eine den Schacht (13) bedeckende Oberseite (15a) und einen Umfangsrand (15b) aufweist, der sich von einem Umfang der Oberseite (15a) der Kappe aus nach unten bis zu einem unteren Rand (15c) erstreckt, der unterhalb der Höhe des oberen Rands des Schachts angeordnet ist.

4. Schadstoffbeseitigendes Bauwerk (1) nach Anspruch 3, wobei der Umfangsrand (15b) sich nach unten bis zu einem unteren Rand (15c) erstreckt, der unterhalb der Höhe des oberen Rands des Schachts (13) angeordnet ist.

5. Schadstoffbeseitigendes Bauwerk (1) nach Anspruch 3 oder Anspruch 4, wobei die Oberseite (15a) der Kappe Teil der oberen Wand (11) ist.

6. Schadstoffbeseitigendes Bauwerk (1) nach einem der Ansprüche 1 und 2, wobei die Bedachung (2) einen hinteren Kragen (31) aufweist, der die Sammelkammer (100) begrenzt und in dessen Nähe der Schacht (13) angeordnet ist, und wobei die Kappe (15) eine den Schacht (15) bedeckende Oberseite (32) aufweist, wobei die Oberseite (32) sich von dem Kragen (31) aus über den Schacht (15) bis zu einem jenseits des Schachts angeordneten vorderen Rand erstreckt, wobei der Rand durch einen Fortsatz (33) nach unten verlängert ist.

7. Schadstoffbeseitigendes Bauwerk (1) nach einem der vorstehenden Ansprüche, ferner aufweisend ein zur Sammelkammer (10) hin offenes Wasserablaufrohr (25).

8. Schadstoffbeseitigendes Bauwerk (1) nach einem der vorstehenden Ansprüche, ferner aufweisend eine elektronische Zentraleinheit (20), die mit dem Gebläse (14) verbunden ist und die eingerichtet ist, das Gebläse (14) zu steuern.

9. Schadstoffbeseitigendes Bauwerk (1) nach Anspruch 8, ferner aufweisend mindestens einen Feuchtigkeitssensor (21), der eingerichtet ist, eine Feuchtigkeit in der Filtrierschicht (8-9) zu messen, und wobei die elektronische Zentraleinheit (20) eingerichtet ist, das Gebläse (14) derart zu steuern, dass das Gebläse (14) nicht arbeitet, wenn die gemessene Feuchtigkeit eine erste vorgegebene Schwelle überschreitet.

10. Schadstoffbeseitigendes Bauwerk (1) nach Anspruch 8 oder Anspruch 9, wobei das Gebläse (14) eingerichtet ist, mindestens einen Betriebsparameter des Gebläses (14) zu messen und der elektronischen Zentraleinheit (20) zu melden, und die elektronische Zentraleinheit (20) eingerichtet ist, das Gebläse (14) auszuhalten, wenn der Betriebsparameter einem anormalen Betrieb des Gebläses (14) entspricht.

11. Schadstoffbeseitigendes Bauwerk (1) nach einem der vorstehenden Ansprüche, wobei die Sammelkammer (10) eingerichtet ist, Wasser (17) zurückzuhalten, und die Bedachung (2) ferner eine Bewässerungsvorrichtung (18-19) aufweist, die eine Pumpe (18), die eingerichtet ist, um Wasser (17) in der Sammelkammer zu pumpen, und mindestens eine mit der Pumpe (18) verbundene Leitung (19) aufweist, die angeordnet ist, um die Filtrierschicht (8-9) zu bewässern, wenn die Pumpe (18) arbeitet.

12. Schadstoffbeseitigendes Bauwerk (1) nach einem der Ansprüche 8 bis 10 in Kombination mit Anspruch 11, wobei die elektronische Zentraleinheit (20) mit der Pumpe (18) verbunden ist und programmiert ist, die Pumpe (18) zu steuern, um die Filtrierschicht (18-19) zu bewässern, wenn die gemessene Feuchtigkeit unterhalb einer zweiten vorgegebenen Schwelle ist.

13. Schadstoffbeseitigendes Bauwerk (1) nach einem der Ansprüche 8 bis 12, wobei die elektronische Zentraleinheit (20) mit einer externen Vorrichtung (24, 26) kommuniziert, die eingerichtet ist, der elektronischen Zentraleinheit (20) Informationen bezüglich eines Luftverschmutzungsgrads bereitzustellen, und die elektronische Zentraleinheit (20) eingerichtet ist, das Gebläse (14) nur dann arbeiten zu lassen, wenn der Luftverschmutzungsgrad oberhalb einer vorgegebenen Schwelle ist.

14. Verwendung eines schadstoffbeseitigenden Bauwerks (1) nach einem der vorstehenden Ansprüche als ein Wartehäuschen für Passagiere (V) des öffentlichen Personenverkehrs.

## Claims

1. Depolluting building (1) including a cover (2) and a supporting structure (3) supporting the cover (2) and delimiting beneath the cover (2) a free space having a height of at least 2 m, the cover comprising:
- a plant filtering layer (8-9),
- an upper wall (11) which is permeable to water and air and which supports the filtering layer (8-9),
- a lower wall (12) which is located under the upper wall (11) and which is impermeable to water, the lower wall (12) joining with the upper wall (11) to define a plenum (10),
- at least one forced ventilation device (7) designed to draw air into the plenum (10) through the filter layer (8-9) and the upper wall (11) and to discharge the air in said free space,
in which the forced ventilation device (7) comprises:
- a waterproof channel (13) extending in the plenum (10) between a lower end (13a) tightly sealed to the lower wall (12) and an upper end (13b) opening into the plenum (10), the lower end (13a) of the channel connected to the atmosphere beneath the lower wall (12),
- and a fan (14) located in said channel (13),
a cap (15) located above the channel (13), said cap (15) being impermeable and designed to prevent water from passing through the filter layer (8-9) and the upper wall (11) and falling into the channel (13).

2. Depolluting building (1) according to claim 1, wherein the cover (2) is markedly horizontal.

3. Depolluting building (1) according to any one of the preceding claims, wherein the cap (15) has a top (15a) covering the channel (13) and a peripheral flange (15b) extending downward from a periphery of the top (15a) of the hat, to a lower edge (15c) located beneath the upper edge of the channel.

4. Depolluting building (1) according to claim 3, wherein the peripheral flange (15b) extending downward to a lower edge (15c) located beneath the upper edge of the channel (13).

5. Depolluting building (1) according to claim 3 or claim 4, wherein the top (15a) of the cap is part of the upper wall (11).

6. Depolluting building (1) according to any one of claims 1 and 2, wherein the cover (2) comprises a rear flange (31) delimiting the plenum (10), in the vicinity of which the channel (13) is located,
and wherein the cap (15) has a top (32) covering the channel (13), the top (32) extending from the flange (31) passing over the channel (15) to a front edge located beyond the channel, said leading edge extended downward by a flap (33).

7. Depolluting building (1) according to any one of the preceding claims, further comprising a water discharge conduit (25) opening into the plenum (10).

8. Depolluting building (1) according to any one of the preceding claims, further comprising an electronic central unit (20) which is connected to the fan (14) and which is adapted to control said fan (14).

9. Depolluting building (1) according to claim 8, further comprising at least one humidity sensor (21) adapted to measure humidity in the filter layer (8-9), and wherein the electronic central unit (20) is adapted to control the fan (14) so that the fan (14) does not operate when the measured humidity exceeds a first predetermined threshold.

10. Depolluting Building (1) according to claim 8 or claim 9, wherein the fan (14) is adapted to measure and communicate to the electronic central unit (20) at least one operating parameter of said fan (14) and the electronic central unit (20) is adapted to stop the fan (14) when said operating parameter corresponds to the abnormal operation of the fan (14).

11. Depolluting building (1) according to any one of the preceding claims, wherein the plenum (10) is adapted to retain water (17) and the cover (2) further includes an irrigation device (18-19) comprising a pump (18) adapted to pump water (17) into the plenum (10) and at least one conduit (19) connected to the pump (18) and designed to irrigate the filter layer (8-9) when the pump (18) is operational.

12. Depolluting building (1) according to one of claims 8 to 10 in combination with claim 11, wherein the electronic central unit (20) is connected to the pump (18) and is programmed to control the pump (18) in order to irrigate the filter layer (18-19) when the measured humidity is below a second predetermined threshold.

13. Depolluting building (1) according to any one of claims 8 to 12, wherein the electronic central unit (20) communicates with an external device (24, 26) adapted to give to said electronic central unit (20) information relating to the air pollution level, and said electronic central unit (20) is designed to operate the fan (14) only when the level of air pollution is above a predetermined threshold.

14. Use of a depolluting building (1) according to any one of the preceding claims, as a passenger shelter (V) for commuters awaiting public transport.
